# EUROPÄISCHE PATENTANMELDUNG

(11) **EP 0 878 608 A2**
(43) Veröffentlichungstag der Anmeldung: **18.11.1998**
(21) Anmeldenummer: 98107391.9
(22) Anmeldetag: 23.04.1998
(51) Int. Cl.: F01N 3/08, F01N 3/20, F01N 5/02

(54) **Verfahren und Vorrichtung zur Stickoxidreduktion im Abgas einer Verbrennungseinrichtung**

(30) Priorität: 13.05.1997 DE 19719998
(71) Anmelder: DAIMLER-BENZ AKTIENGESELLSCHAFT, 70567 Stuttgart (DE)
(72) Erfinder: Wirbeleit, Friedrich, Dr., 73733 Esslingen (DE); Teigeler, Martin, 70372 Stuttgart (DE); Lehner, Wolfgang, 73733 Esslingen (DE)

(57) **Zusammenfassung**

Die Erfindung bezieht sich auf ein Verfahren und eine Vorrichtung zur Reduktion von im Abgas einer Verbrennungseinrichtung, insbesondere eines Verbrennungsmotors, enthaltenen Stickoxiden unter Zugabe eines Reduktionsmittels.

Bei dem erfindungsgemäßen Verfahren wird fester, reiner Harnstoff geschmolzen und das so erhaltene Schmelzeprodukt als Reduktionsmittel zur Stickoxidreduktion dem Abgas zugegeben. Die erfindungsgemäße Vorrichtung beinhaltet eine zur Durchführung dieses Verfahrens geeignete Einrichtung zur gesteuerten Verflüssigung festen, reinen Harnstoffs und Einspritzung des Schmelzeproduktes in das Abgas.

Verwendung z.B. in Kraftfahrzeugen mit qualitätsgeregeltem Dieselmotor oder im Magerbetrieb arbeitendem Ottomotor.

## Beschreibung

Die Erfindung bezieht sich auf ein Verfahren und eine Vorrichtung zur Reduktion von im Abgas einer Verbrennungseinrichtung enthaltenen Stickoxiden unter Zugabe eines Reduktionsmittels.

Derartige Verfahren und Vorrichtungen sind z.B. bei Kraftfahrzeugmotoren gebräuchlich. Der Luftüberschuß am qualitätsgeregelt betriebenen Dieselmotor sowie der zur Verringerung des Kraftstoffverbrauchs bei Ottomotoren häufig angewandte Magerbetrieb verhindern, daß die vom Motor emittierten Stickoxide allein durch katalytische Reduktion umgewandelt werden können. Als Abhilfe ist es bekannt, dem von Stickoxiden zu reinigenden Abgas ein geeignetes Reduktionsmittel zuzugeben.

So wird in der Offenlegungsschrift DE 40 38 054 A1 vorgeschlagen, eine wäßrige Harnstofflösung in einem Verdampfer zu verdampfen und dabei zu Ammoniak und Kohlendioxid zu hydrolisieren, wobei die Hydrolyse gegebenenfalls durch einen nachgeschalteten Hydrolysekatalysator vervollständigt wird. Das durch die Harnstoffhydrolyse bei 140°C bis 300°C gebildete Gasgemisch aus Ammoniak und Wasser wird dann als Reduktionsmittel in das Abgas einer Verbrennungseinrichtung, wie eines Kraftfahrzeug-Verbrennungsmotors, eingesprüht. Mit Hilfe eines nachgeschalteten Reduktionskatalysators erfolgt dann eine selektive katalytische Reduktion der Stickoxide. Weitergehend ist in der Offenlegungsschrift DE 42 03 807 A1 angegeben, den Verdampfer als Strömungsmischer auszubilden und dadurch einen kompakten Aufbau der Stickoxidreduktionseinrichtung zu ermöglichen. Dort wird außerdem angegeben, die wäßrige Harnstofflösung mittels einer zugehörigen Regelung in Abhängigkeit von der Motordrehzahl und der Motorlast zuzugeben, um einen nachgeschalteten Reduktionskatalysator von überschüssigem Ammoniak freizuhalten. Dabei wird die Harnstoffzugabe nur aktiviert, wenn die an mehreren Stellen mittels entsprechender Sensoren erfaßte Abgastemperatur über einem vorgebbaren Grenzwert liegt. Weiter wird dort erwähnt, daß sich bei Einsprühen einer bei Bedarf vorerwärmten Harnstofflösung direkt in eine Abgasleitung vor einem Reduktionskatalysator unerwünschte Reaktionsprodukte bilden können, indem sich der Harnstoff durch Thermolyse unter Gasentwicklung zur umschmelzberen Cyanursäure zersetzt, wenn er über seinen Schmelzpunkt erhitzt wird. Beim Erhitzen von Harnstoff auf 130°C bis 250°C trete eine Sublimation unter teilweiser Zersetzung zu Ammoniak und der reaktiven Isocyansäure auf, während im Rückstand Biuret, die Cyanursäure und Ammelid verblieben, wobei die beiden zuletzt genannten sowie gegebenenfalls weitere Stoffe für eine Vergasung des Harnstoffs sehr hinderlich seien, da aus dem festen Harnstoff zunächst flüssiger Harnstoff und dann wieder feste, unschmelzbare Stoffe entstünden.

Weitere Details zur thermischen Zersetzung von Harnstoff sind in den Diplomarbeiten M. Müller, Beitrag über den Reaktionsmechanismus der Pyrolyse von Harnstoff, Universität Kaiserslautern, 1992 und J. Weichmann, Reaktionskinetische Untersuchungen zur thermischen Zersetzung von Nylon 6 und anderen Stoffen, Universität Kaiserslautern, 1992 beschrieben.

In der Patentschrift US 5 296 206 ist ebenfalls das Einspritzen eines durch Verdampfung einer wäßrigen Harnstoff- oder Ammoniaklösung gebildeten Reduktionsmittels in den Abgasstrom einer Verbrennungseinrichtung zwecks katalytischer, alternativ auch nicht-katalytischer Reduktion von im Abgas enthaltenen Stickoxiden offenbart. Der Verdampfer wird bei der dortigen Anordnung von einem Druckluftstrom beheizt, der zuvor über einen im Abgasstrom liegenden Wärmeübertrager geleitet wird und dadurch Abgaswärme aufzunehmen vermag. Der Reduktionsmittel-Einspritzvorgang wird von einer zugehörigen Regelung in Abhängigkeit von diesbezüglich relevanten Betriebsparametern vorgenommen, wie Abgasflußrate, Abgastemperatur und Stickoxidkonzentration des Abgases.

In der Offenlegungsschrift EP 0 615 777 A1 werden ein Verfahren und eine Vorrichtung zur selektiven katalytischen Stickoxidreduktion im Abgas einer Verbrennungseinrichtung, wie eines Verbrennungsmotors, beschrieben, bei denen fester Harnstoff als Reduktionsmittel dem Abgas zugegeben wird. Der Harnstoff wird dabei in Form von Mikroprills, die einen Korndurchmesser zwischen 10µm und 1000µm aufweisen, mit Hilfe von Preßluft zugeführt und in den Abgasstrom zerstäubt. Zur Aufrechterhaltung der Fließfähigkeit der hygroskopischen Harnstoff-Mikroprills sind spezielle Maßnahmen erforderlich.

Der Erfindung liegt als technisches Problem die Bereitstellung eines Verfahrens und einer Vorrichtung der eingangs genannten Art zugrunde, mit denen sich die im Abgas einer Verbrennungseinrichtung enthaltenen Stickoxide vergleichsweise einfach und zuverlässig reduzieren lassen.

Die Erfindung löst dieses Problem durch die Bereitstellung eines Verfahrens mit den Merkmalen des Anspruchs 1 sowie einer Vorrichtung mit den Merkmalen des Anspruchs 3.

Gemäß dem Verfahren von Anspruch 1 wird als Reduktionsmittel zur Stickoxidreduktion ein Schmelzeprodukt zugegeben, das durch Schmelzen von reinem Harnstoff mittels entsprechender Erwärmung desselben gewonnen wird. Wie bei allen auf Harnstoff basierenden Reduktionsmittelzugaben dient auch vorliegend der aus dem Harnstoff entstehende Ammoniak als primäres Stickoxidreduktionsmittel. Durch die thermische Vorbehandlung des Harnstoffs, d.h. der Verflüssigung desselben, kann bereits eine Pyrolyse von Harnstoff zu Ammoniak und gegebenenfalls Isocyansäure stattfinden, so daß das dem Abgas zugegebene Schmelzeprodukt bereits Ammoniak enthält. Durch die Zugabe dieses Reduktionsmittels in flüssiger Form zum Abgas werden die mit der Verdampfung wäßriger Harnstofflösungen bzw. der Einbringung von Harnstoff in fester, fein pulverisierter Form bekanntermaßen verbundenen Schwierigkeiten vermieden.

Gemäß einem nach Anspruch 2 weitergebildeten Verfahren erfolgt die Erwärmung des reinen Harnstoffs beim Schmelzvorgang höchstens auf eine Temperatur von etwa 250°C, vorzugsweise auf eine Temperatur zwischen 133°C und etwa 160°C. Bei einer typischen Aufheizrate von z.B. 20°C pro Minute läßt sich dadurch die von höheren Temperaturen begünstigte Entstehung unerwünschter Harnstoffzersetzungsprodukte, wie z.B. Cyanursäure aus dem Trimerisierungsprozeß von Isocyansäure, verhindern.

Die zur Durchführung des erfindungsgemäßen Verfahrens geeignete Vorrichtung nach Anspruch 3 beinhaltet eine Verflüssigungs- und Einspritzeinrichtung, mit der reiner Harnstoff kontrolliert über die Schmelztemperatur erwärmt und das so erhaltene Schmelzeprodukt als Reduktionsmittel zur Stickoxidreduktion in den Abgasstrom der Verbrennungseinrichtung eingespritzt wird, wobei die Einspritzung z.B. im Fall eines Verbrennungsmotors in dessen Brennräume oder einen nachgeschalteten Abgasstrang erfolgen kann.

Eine nach Anspruch 4 weitergebildete Vorrichtung ist auf die Verwendung bei einem Verbrennungsmotor ausgelegt, wobei die Verflüssigungs- und Einspritzeinrichtung eine Heizapparatur, eine Förderapparatur und eine Einspritzapparatur beinhaltet. Die Förderapparatur führt der Heizapparatur eine von der Motorlast und Motordrehzahl abhängig steuerbare Harnstoffördermenge zu, und die Einspritzapparatur nimmt das Einspritzen des von der Heizapparatur bereitgestellten Schmelzeproduktes in Abhängigkeit von der Motorlast, der Motordrehzahl und dem Kurbelwinkel des Verbrennungsmotors vor.

In Weiterbildung der Vorrichtung von Anspruch 4 beinhaltet gemäß Anspruch 5 die Heizapparatur einen Abgaswärmeübertrager, mit dem Wärme von einem steuerbaren Anteil des Abgasstroms zur Verflüssigung des Harnstoffs genutzt wird.

Eine vorteilhafte Ausführungsform der Erfindung ist in den Zeichnungen dargestellt und wird nachfolgend beschrieben. Hierbei zeigen:
- Fig. 1: eine Vorrichtung zur Reduktion von im Abgas eines Kraftfahrzeug-Verbrennungsmotors enthaltenen Stickoxiden unter Zugabe eines Harnstoff-Schmelzeproduktes und
- Fig. 2: ein schematisches Flußdiagramm eines möglichen Betriebsverfahrens für die Vorrichtung von Fig. 1.

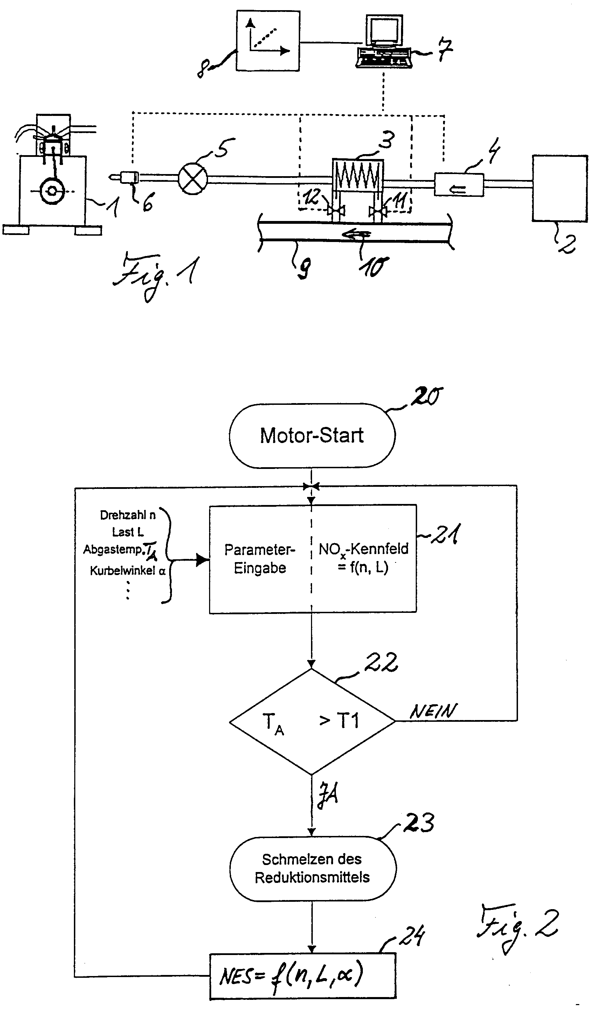

Die in Fig. 1 gezeigte Vorrichtung dient zur Reduktion von Stickoxiden, die im Abgas eines Kraftfahrzeug-Verbrennungsmotors 1 enthalten sind, unter Zugabe eines Harnstoff-Schmelzeproduktes. Dazu beinhaltet die Vorrichtung eine Einrichtung zur kontrollierten Verflüssigung von festem Harnstoff, der in kristalliner oder pulverisierter Form in einem im Fahrzeug mitgeführten Harnstoffvorratsbehälter 2 bevorratet ist, und Einspritzung des dadurch erhaltenen Schmelzeproduktes in das Verbrennungsmotorabgas. Speziell weist die Einrichtung hierzu eine Heizapparatur in Form eines Abgaswärmeübertragers 3, eine Förderapparatur in Form einer ansteuerbaren Förderschnecke 4 und eine Einspritzapparatur auf, die aus einer Hochdruckeinspritzpumpe 5 und einer oder mehreren ansteuerbaren Einspritzdüsen 6 besteht. Des weiteren beinhaltet die Verflüssigungs- und Einspritzeinrichtung eine Steuer- oder Regeleinheit 7, z.B. in Form eines Personalcomputers mit entsprechenden Peripheriegeräten, wie Tastatur, Bildschirm, etc. In dieser Einheit 7 ist unter anderem ein vorgebbares NOₓ-Kennfeld 8 über den für die betreffende Verbrennungsmotoranlage 1 geltenden Zusammenhang der Stickoxidkonzentration im Motorabgas in Abhängigkeit von Drehzahl und Last des Motors abgespeichert.

Die von der Steuer- oder Regeleinheit 7 angesteuerte Förderschnecke 4 führt dem Wärmeübertrager 3 festen Harnstoff aus dem Vorratsbehälter 2 in einer von der Motordrehzahl und der Motorlast abhängigen Fördermenge zu. Der Wärmeübertrager 3 ist mit einem Abgasteilstrom beaufschlagbar, der an einem zugehörigen Abschnitt 9 des Abgasstrangs des Verbrennungsmotors 1 dem vom Motor kommenden Abgasstrom 10 entnommen wird. Die Menge an durch den Wärmeübertrager 3 geleitetem Abgas ist über ein eintrittsseitiges und ein austrittsseitiges Ventil 11, 12 steuerbar, die beide von der Steuer- oder Regeleinheit 7 angesteuert werden. Im Wärmeübertrager 3 wird Wärme vom durchströmenden Abgasteilstrom auf den zugeführten, kristallinen oder pulverisierten Harnstoff übertragen und letzterer dadurch bis zu einer vorgebbaren, über seiner Schmelztemperatur liegenden Temperatur erwärmt.

Das so entstehende Schmelzeprodukt, das durch Pyrolyse von Harnstoff bereits Ammoniak und gegebenenfalls Isocyansäure (HNCO) enthält, gelangt dann zur Hochdruckeinspritzpumpe 5, von der es über die eine oder mehreren Einspritzdüsen 6 in das Motorabgas eingespritzt wird. Bevorzugte Einspritzstellen liegen bei selektiver katalytischer Stickoxidreduktion, d.h. bei Vorhandensein eines entsprechenden Reduktionskatalysators, vor der Eintrittsseite dieses Katalysators sowie im Fall nicht-katalytischer Stickoxidreduktion in dem oder den Brennräumen des Motors 1, im Brennraum-Auslaßkanal eines zugehörigen Zylinderkopfes oder unmittelbar vor der Abgasturbine eines Abgasturboladers. An diesen Stellen sind jeweils die erforderlichen Temperatur- und Strömungsturbulenz-Verhältnisse für eine effektive Einbringung und Wirkungsentfaltung des Reduktionsmittels gegeben.

Fig. 2 veranschaulicht den mit der Vorrichtung von Fig. 1 bevorzugt realisierten Betriebsablauf in Form eines Flußdiagramms. Nach einem jeweiligen Start des Motors (Schritt 20) empfängt die Steuer- oder Regeleinheit 7 die zur Steuerung oder Regelung der Reduktionsmittelzugabe zum Motorabgas relevanten Eingangsgrößen, die über zugehörige, herkömmliche Sensoren erfaßt werden. Insbesondere sind dies die Größen Motordrehzahl n, Motorlast L, Abgastemperatur T_{A} und Kurbelwinkel α des Motors 1 sowie je nach Anwendungsfall weitere, für die Reduktionsmittelzugabe relevante Größen (Schritt 21). Die Steuer- oder Regeleinheit 7 ermittelt in diesem Schritt 21 anhand der zugeführten Informationen über die momentane Motordrehzahl n und die momentane Motorlast L, die momentane Stickoxidkonzentration im Motorabgas anhand des abgelegten Kennfeldes 8. Anschließend prüft sie, ob die Abgastemperatur T_{A} größer als eine vorgegebene Temperatur T1 ist, auf welche der Harnstoff im Wärmeübertrager 3 aufgeheizt werden soll (Schritt 22).

Diese Solltemperatur T1 für das durch das Schmelzen des festen Harnstoffs erhaltene Schmelzeprodukt ist dabei einerseits natürlich mindestens so groß wie die Harnstoffschmelztemperatur von 133°C, andererseits jedoch nicht höher als eine gewisse obere Grenztemperatur gewählt, die z.B. für eine typischerweise verwendete Aufheizrate von 20°C pro Minute bis zu etwa 250°C betragen kann, vorzugsweise jedoch im Bereich von etwa 160°C liegt. Durch Steuerung oder Regelung der Temperatur des Harnstoff-Schmelzeproduktes auf einen derartigen Temperaturbereich zwischen 133°C bis ca. 250°C, bevorzugt bis ca. 160°C, läßt sich die Entstehung unerwünschter Produkte bei der Harnstoffpyrolyse verhindern, wie z.B. die Bildung von Cyanursäure (C₃N₃O₃H₃) aus dem Trimerisierungsprozeß von Isocyansäure.

Solange die Abgastemperatur T_{A} die vorgegebene Solltemperatur T1 des Harnstoff-Schmelzeproduktes nicht überschritten hat und folglich der in fester Form bei Raumtemperatur dem Wärmeübertrager 3 zugeführte Harnstoff durch die Abgaswärme nicht auf diese Solltemperatur T1 aufgeheizt werden kann, hält die Steuer- oder Regeleinheit 7 die Förderschnecke 4 inaktiv, d.h. es findet keine Reduktionsmittelzugabe statt. Ohnehin würde in diesem niedrigen Abgastemperaturbereich noch keine effektive Stickoxidreduktionsreaktion ablaufen. Sobald die Abgastemperatur T_{A} die Solltemperatur T1 des Harnstoff-Schmelzeproduktes überschritten hat, aktiviert die Steuer- oder Regeleinheit 7 die Reduktionsmittelzugabe, indem sie zunächst den Schmelzvorgang zur Gewinnung des in das Abgas einzuspritzenden Harnstoff-Schmelzeproduktes aktiviert (Schritt 23). Dazu gibt sie über die Förderschnecke 4 die situationsgerechte Harnstoffmenge und über die Ventile 11, 12 die den Wärmeübertrager 3 durchströmende Abgasteilstrommenge und damit die zur Erwärmung der zugeführten Harnstoffmenge auf die vorgegebene Solltemperatur T1 nötige Abgaswärme vor. Das solchermaßen gewonnene Harnstoff-Schmelzeprodukt wird dann in einem von der Steuer- oder Regeleinheit 7 festgelegten Reduktionsmittel-Nacheinspritzvorgang NES durch entsprechende Ansteuerung der einen oder mehreren Einspritzdüsen 6 an den betreffenden Stellen in den Abgasstrom eingespritzt (Schritt 24). Dabei bestimmt die Steuer- oder Regeleinheit 7 den Nacheinspritzvorgang NES hinsichtlich Einspritzdauer und Einspritzbeginn in Abhängigkeit von der Motordrehzahl n, der Motorlast L und dem Kurbelwinkel α. Durch kontinuierliche Beobachtung, d.h. zyklische Wiederholung des Programmablaufs von Fig. 2, wird die Reduktionsmitteleinspritzung laufend an die jeweilige Motorbetriebssituation angepaßt.

Anhand des oben erläuterten Ausführungsbeispiels zeigt sich, daß durch das erfindungsgemäße Verfahren und die erfindungsgemäße Vorrichtung eine vergleichsweise einfache und zuverlässige Reduktionsmittelzugabe zur Reduktion von Stickoxiden in einem Verbrennungsabgas realisiert wird. Es versteht sich, daß die beanspruchte Erfindung verschiedene Varianten des gezeigten Beispiels umfaßt. So kann beispielsweise anstelle des oder zusätzlich zum Abgaswärmeübertrager eine abgasunabhängige, z.B. elektrische Heizapparatur zum Schmelzen des Harnstoffs vorgesehen sein. Weiter kann die gezeigte Steuer- oder Regeleinheit je nach Anwendungsfall als bloße Steuerung oder als Regelung, z.B. mit rückgeführter Information über die Stickoxidkonzentration im austrittseitigen Endbereich eines Motorabgasstrang, ausgelegt sein. Der Erfindungsgegenstand ist selbstverständlich nicht auf die Verwendung bei Kraftfahrzeugmotoren beschränkt, sondern in gleicher Weise bei stationären Verbrennungsmotoren und anderen stickoxidemittierenden Verbrennungseinrichtungen anwendbar.

## Patentansprüche

1. Verfahren zur Reduktion von im Abgas einer Verbrennungseinrichtung, insbesondere eines Verbrennungsmotors, enthaltenen Stickoxiden unter Zugabe eines Reduktionsmittels,
**dadurch gekennzeichnet, daß**
fester, reiner Harnstoff geschmolzen und das so erhaltene Schmelzeprodukt als Reduktionsmittel zur Stickoxidreduktion dem Abgas zugegeben wird.

2. Verfahren nach Anspruch 1, weiter
**dadurch gekennzeichnet, daß**
das Schmelzen des reinen Harnstoffs eine Erwärmung auf eine Temperatur von höchstens etwa 250°C, bevorzugt von höchstens etwa 160°C, beinhaltet.

3. Vorrichtung zur Reduktion von im Abgas einer Verbrennungseinrichtung, insbesondere eines Verbrennungsmotors, enthaltenen Stickoxiden unter Zugabe eines Reduktionsmittels,
**gekennzeichnet durch**
eine Verflüssigungs- und Einspritzeinrichtung (3, 4, 5, 6) zum Erwärmen von festem, reinem Harnstoff über die Schmelztemperatur und zum gesteuerten Einspritzen des so erhaltenen Schmelzeproduktes als Reduktionsmittel zur Stickoxidreduktion in das Abgas der Verbrennungseinrichtung.

4. Vorrichtung nach Anspruch 3, weiter
**dadurch gekennzeichnet, daß**
sie für einen Verbrennungsmotor vorgesehen ist und die Verflüssigungs- und Einspritzeinrichtung eine Heizapparatur (3) zum steuerbaren Erwärmen von zugeführtem festem Harnstoff über die Schmelztemperatur, eine Förderapparatur (4), die bevorrateten, festen Harnstoff in einer von der Motorlast (L) und der Motordrehzahl (n) abhängig steuerbaren Fördermenge der Heizapparatur zuführt, und eine Einspritzapparatur (5, 6) beinhaltet, die das von der Heizapparatur gelieferte Schmelzeprodukt in einem von der Motorlast (L), der Motordrehzahl (n) und dem Kurbelwinkel (α) des Verbrennungsmotors (1) abhängig steuerbaren Reduktionsmittel-Einspritzvorgang einspritzt.

5. Vorrichtung nach Anspruch 4, weiter
**dadurch gekennzeichnet, daß**
die Heizapparatur einen Abgaswärmeübertrager (3) beinhaltet, der einerseits vom zugeführten Harnstoff und andererseits von einem steuerbaren Anteil des Motorabgasstroms (10) durchströmbar ist.
